# EUROPÄISCHE PATENTSCHRIFT

(11) **EP 0 509 246 B1**
(45) Veröffentlichungstag und Bekanntmachung des Hinweises auf die Patenterteilung: **01.06.1994**
(21) Anmeldenummer: 92104394.9
(22) Anmeldetag: 13.03.1992
(51) Int. Cl.: H02J 13/00, H03H 17/02

(54) **Rundsteuerempfänger**
Ripple control receiver
Récepteur de télécommande centralisé

(30) Priorität: 15.03.1991 AT 586/91
(43) Veröffentlichungstag der Anmeldung: 21.10.1992
(73) Patentinhaber: SIEMENS AKTIENGESELLSCHAFT, 80333 München (DE); Siemens Aktiengesellschaft Österreich, 1210 Wien (AT)
(72) Erfinder: Hopfmüller, Gebhard, Dipl.-Ing., A-2540 Bad Vöslau (AT)

(56) Entgegenhaltungen:
- EP-A- 0 105 087
- EP-A- 0 212 307
- CH-A- 666 580
- DE-A- 3 031 163
- Digitale Filter in der Rundsteuertechnik, J. Stöckle, Elektrotechn. Zeitschrift 109 (1988) März, No. 5, Berlin, W. Germany

## Beschreibung

Die Erfindung betrifft einen Rundsteuerempfänger mit einem Vorfilter und einem digitalen Bandpaßfilter mit vorgeschaltetem Analog/Digital-Wandler.

Es ist bekannt, die zur Auslösung von Schaltbefehlen dienenden und durch Rundsteuersignale, die der Netzfrequenz überlagert sind, angesteuerten Rundsteuerempfänger einerseits mit einem die Netzfrequenz unterdrückenden Vorfilter und anderseits mit einem zur selektiven Erkennung der Steuerfrequenz des Rundsteuersignales (Rundsteuerfrequenz) dienenden Digitalfilter auszustatten. Einrichtungen dieser Art sind in den EP-A2-212 307, EP-A2-105 087 und "Digitale Filter in der Rundsteuertechnik", J. Stöckle, Elektrotechnische Zeitschrift 109 (1988) März, No. 5, Berlin, W.Germany beschrieben. Da eine eindeutige Erkennung eines abgetasteten Signales nur dann gewährleistet ist, wenn die Abtastfrequenz so groß ist, daß auf eine Periode der höchsten in diesem Signal vorkommenden Frequenz noch mindestens zwei Abtastmomente entfallen, würden bei den üblichen Rundsteuerfrequenzen bis zu 2 kHz Abtastraten von bis zu 4 kHz erforderlich sein. Somit bleibt für die Verabeitung der Filterdaten pro Schritt nur eine Zeit von weniger als 250 Mikrosekunden. Dieser Wert ist für billige Single Chip Mikrocomputer, wie sie aus Kostengründen in Rundsteuerempfängern eingesetzt werden, kaum zu erreichen. Dazu kommt noch erschwerend der Umstand, daß derselbe Mikrocomputer auch noch die Rundsteuerinformation decodieren und verarbeiten soll, was die zur Verfügung stehende Zeit weiter einschränkt.

Darüber hinaus ist die Dynamik (Einschwingverhalten) reiner Rechenfilter durch den vorgeschalteten Analog/Digital-Wandler beschränkt, der bei den o. a. Mikrocomputern meist nur eine Breite von 8 bit aufweist, was in Anbetracht der Tatsache, daß die Steuerfrequenz mit Amplituden von etwa 0,3 % der Netzspannung auswertbar sein muß, sehr wenig ist.

Die Erfindung hat sich die Aufgabe gestellt, diese Nachteile der bekannten Rundsteuerempfänger zu vermeiden und erzielt dies dadurch, daß die auf die Rundsteuerfrequenz abgestimmte Mittenfrequenz eines der höherfrequenten Durchlaßbereiche des digitalen Bandpaßfilters gleich ist sowohl einer höheren Spiegelfrequenz der Abtastfrequenz des Analog/Digital-Wandlers als auch der Mittenfrequenz des die Netzfrequenz unterdrückenden, als Bandpaß ausgebildeten Vorfilters.

Hierbei macht sich die Erfindung den Umstand zunutze, daß digitale Bandfilter außer dem auf die Grundfrequenz abgestimmten und symmetrisch zu dieser Grundfrequenz angeordneten Durchlaßbereich noch weitere Durchlaßbereiche besitzen, die die ungeradzahlig vielfachen Frequenzen der Grundfrequenz als Mittenfrequenzen aufweisen. Dadurch kann bei einer niedrigen Abtastfrequenz mittels eines höherfrequenten Durchlaßbereiches des digitalen Bandfilters auch die Selektion einer entsprechend höheren Rundsteuerfrequenz erzielt werden.

Gemäß einem weiteren Merkmal der Erfindung ist das Vorfilter als zeitdiskretes Filter ausgeführt, dessen Taktfrequenz vom auswertenden Mikrocomputer gesteuert und dadurch an die Rundsteuerfrequenz anpaßbar ist, wobei analoge Tiefpaßfilter zur Bandbegrenzung des zeitdiskreten Filters Ausgangssignales vorgesehen sind.

Es ist zweckmäßig, das digitale Bandfilter in den auswertenden Mikrocomputer des Rundsteuerempfängers zu integrieren, wobei der Mikrocomputer ein 8-bit-Computer ist. Es ist auch zweckmäßig als Analog/Digital-Wandler einen 8-bit-Wandler zu verwenden, der in den Mikrocomputer integriert ist.

Das Vorfilter kann auch als Rechenfilter, oder als Schalter-Kondensator-Filter ausgeführt sein.

Als Ausführungsbeispiel der Erfindung ist in Fig. 1 der prinzipielle Aufbau des Filters eines Rundsteuerempfängers dargestellt. Fig. 2 und 3 zeigt die für die Erläuterung der Erfindung erforderlichen Filterkurven.

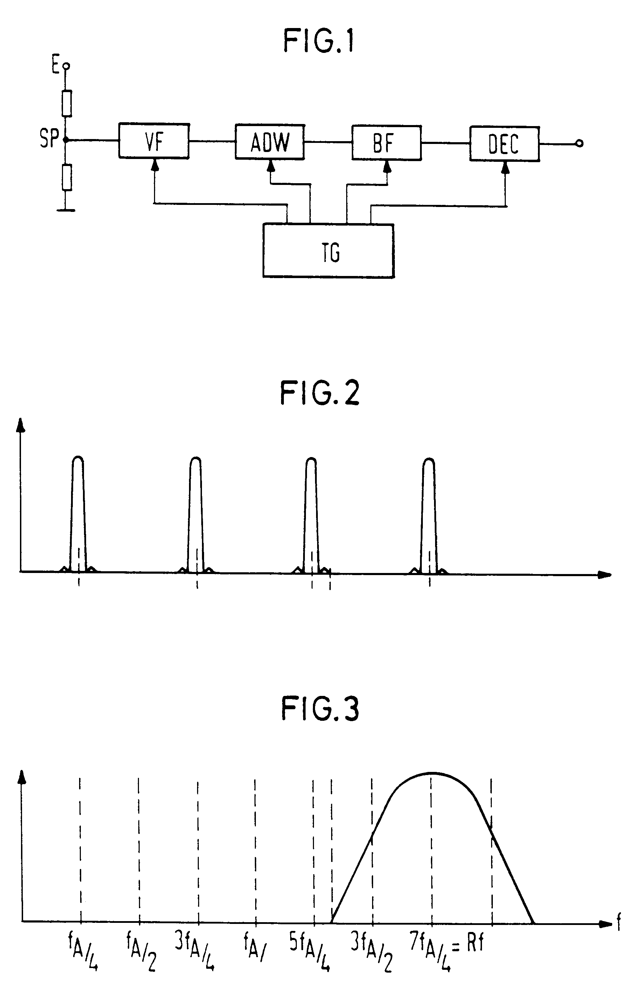

Die Netzspannung liegt am Eingang E der in Fig. 1 dargestellten Filterschaltung. Mittels eines Spannungsteilers SP wird ein für die Verarbeitung in der Filterschaltung geeigneter Spannungspegel gewonnen. Mittels eines angeschlossenen Vorfilters VF wird die 50 Hz-Netzfrequenz ausgefiltert, und das von der Netzfrequenz befreite Frequenzgemisch einem Analog/Digital-Wandler ADW zugeführt. Ein nachgeschaltetes Bandpaßfilter BF ist mit seiner Mittenfrequenz auf die Rundsteuerfrequenz Rf abgestimmt und liefert an einen angeschlossenen Decoder DEC ein Signal, aus dem der Decoder DEC erkennt, ob das Rundsteuersignal gerade vorhanden ist oder nicht. Demgemäß liefert der Decoder DEC an seinem Ausgang A ein binäres Signal, das in seiner Gesamtheit das Rundsteuersignal darstellt, das von einer angeschlossenen, jedoch nicht dargestellten Impulsauswerteschaltung weiter verarbeitet wird. Mit TG ist ein Taktgenerator bezeichnet, der für alle angeschlossenen Geräte die Abtast-Taktimpulse liefert.

Die Wirkungsweise der erfindungsgemäßen Filteranordnung beruht darauf, daß das die Rundsteuerfrequenz Rf selektierende Bandpaßfilter BF mehrere Durchlaßbereiche aufweist, die im Diagramm der Fig. 2 über die Frequenz f eingetragen sind. Mit f_{A} ist die Abtastfrequenz des Analog/Digital-Wandlers ADW bezeichnet. Die Grundfrequenz und zugleich Mittenfrequenz des ersten Durchlaßbereiches des Bandfilters BF ist gleich der Frequenz f_{A}/4. Die weiteren Durchlaßbereiche des Bandfilters BF haben als Mittenfrequenzen die ungeradzahligen Vielfachen der Grundfrequenz f_{A}/4, also 3f_{A}/4, 5f_{A}/4 und 7f_{A}/4. Die höherfrequenten Durchlaßbereiche des Bandfilters BF liegen mit ihren Mittenfrequenzen also wesentlich höher als die Abtastfrequenz f_{A} des Analog/Digital-Wandlers ADW, d.h. umgekehrt, daß die Abtastfrequenz f_{A} so niedrig gewählt werden kann, daß sich die erwähnten Vorteile für die Rechengeschwindigkeit ergeben, welche wiederum die Verwendung billiger Mikroprozessoren ermöglichen.

In Fig. 3 ist schließlich der Durchlaßbereich des Vorfilters VF dargestellt, dessen Mittenfrequenz gleich der Rundsteuerfrequenz Rf ist. Die Bandbreite des Vorfilters VF ist so gewählt, daß keine Kollision mit den benachbarten Durchlaßbereichen des digitalen Bandpaßfilters BF zustandekommt.

## Patentansprüche

1. Rundsteuerempfänger mit einem Vorfilter (VF) und einem digitalen Bandpaßfilter (BF) mit vorgeschaltetem Analog/Digital-Wandler (ADW), **dadurch gekennzeichnet,** daß die auf die Rundsteuerfrequenz (Rf) abgestimmte Mittenfrequenz eines der höherfrequenten Durchlaßbereiche des digitalen Bandpaßfilters (BF) gleich ist sowohl einer höheren Spiegelfrequenz (7f_{A}/4) der Abtastfrequenz des Analog/Digital-Wandlers (ADW) als auch der Mittenfrequenz des die Netzfrequenz unterdrückenden, als Bandpaß ausgebildeten Vorfilters (VF).

2. Rundsteuerempfänger nach Anspruch 1, **dadurch gekennzeichnet,** daß das Vorfilter (VF) als zeitdiskretes Filter ausgeführt ist, dessen Taktfrequenz vom auswertenden Mikrocomputer gesteuert und dadurch an die Rundsteuerfrequenz (RF) anpaßbar ist, wobei analoge Tiefpaßfilter zur Bandbegrenzung des zeitdiskreten Filters Ausgangssignales vorgesehen sind.

3. Rundsteuerempfänger nach Anspruch 1 oder 2, **dadurch** **gekennzeichnet**, daß das digitale Bandpaßfilter (BF) in dem auswertenden Mikrocomputer integriert ist, wobei der Mikrocomputer ein 8-bit Computer ist.

4. Rundsteuerempfänger nach einem der vorhergehenden Ansprüche, **dadurch gekennzeichnet,** daß der dem digitalen Bandpaßfilter (BF) vorgeschaltete Analog/Digital-Wandler (ADW) als 8-bit-Wandler ausgebildet und in den Mikrocomputer integriert ist.

5. Rundsteuerempfänger nach einem der vorhergehenden Ansprüche, **dadurch gekennzeichnet,** daß das Vorfilter (VF) als Rechenfilter ausgeführt ist.

6. Rundsteuerempfänger nach einem der vorhergehenden Ansprüche, **dadurch gekennzeichnet,** daß das Vorfilter (VF) als Schalter-Kondensator-Filter ausgeführt ist.

## Claims

1. Ripple-control receiver having a pre-filter (VF) and a digital bandpass filter (BF) having an analogue-to-digital converter (ADW) connected upstream, characterised in that the mid-frequency of one of the higher-frequency pass bands of the digital bandpass filter (BF), which mid-frequency is tuned to the ripple-control frequency (Rf), is equal both to a higher image frequency (7f_{A}/4) of the scanning frequency of the analogue-to-digital converter (ADW) and to the mid-frequency of the pre-filter (VF) which suppresses the system frequency and is constructed as a bandpass.

2. Ripple-control receiver according to claim 1, characterised in that the pre-filter (VF) is constructed as a discrete-time filter, the clock frequency of which is controlled by the analysis microcomputer and can be matched by this means to the ripple-control frequency (RF), wherein similar low-pass filters are provided for band limitation of the discrete-time filter's output signal.

3. Ripple-control receiver according to claim 1 or 2, characterised in that the digital bandpass filter (BF) is integrated in the analysis microcomputer, wherein the microcomputer is an 8-bit computer.

4. Ripple-control receiver according to one of the preceding claims, characterised in that the analogue-to-digital converter (ADW) connected upstream to the digital bandpass filter (BF) is constructed as an 8-bit converter and is integrated into the microcomputer.

5. Ripple-control receiver according to one of the preceding claims, characterised in that the pre-filter (VF) is constructed as a computing filter.

6. Ripple-control receiver according to one of the preceding claims, characterised in that the pre-filter (VF) is constructed as a switch-capacitor filter.

## Revendications

1. Récepteur de télécommande centralisée, comportant un filtre amont (VF) et un filtre passe-bande (BF) numérique à convertisseur analogique/numérique (ADW) amont, caractérisé en ce que la fréquence centrale, accordée sur la fréquence de télécommande centralisée (Rf), d'une des zones de passage à haute fréquence du filtre passe-bande numérique (BF), est égale non seulement à une fréquence-image (7f_{A}/4) supérieure de la fréquence d'échantillonnage du convertisseur analogique/numérique (ADW), mais également à la fréquence centrale du filtre amont (VF) qui shunte la fréquence du réseau et formé en tant que filtre passe-bande.

2. Récepteur de télécommande centralisée suivant la revendication 1, caractérisé en ce que le filtre amont (VF) est réalisé en tant que filtre à valeur temporelle discrète, dont la fréquence de cadence est commandée par le micro-ordinateur d'évaluation et est ainsi susceptible d'être adaptée à la fréquence de télécommande centralisée, des filtres passe-bas analogiques étant prévus pour limiter la bande passante du signal de sortie du filtre à valeur temporelle discrète.

3. Récepteur de télécommande centralisée suivant la revendication 1 ou 2, caractérisé en ce que le filtre passe-bande numérique (BF) est intégré dans le micro-ordinateur d'évaluation qui est un ordinateur 8 bits.

4. Récepteur de télécommande centralisée suivant l'une des revendications précédentes, caractérisé en ce que le convertisseur analogique/numérique (ADW), monté en amont du filtre passe-bande numérique (BF), est réalisé en tant que convertisseur 8 bits et est intégré dans le micro-ordinateur.

5. Récepteur de télécommande centralisée suivant l'une des revendications précédentes, caractérisé en ce que le filtre amont (VF) est réalisé en tant que filtre arithmétique.

6. Récepteur de télécommande centralisée suivant l'une des revendications précédentes, caractérisé en ce que le filtre amont (VF) est réalisé en tant que filtre à capacités commutées.
